# EUROPEAN PATENT APPLICATION

(11) **EP 4 456 171 A1**
(43) Date of publication of application: **30.10.2024**
(21) Application number: 24172227.1
(22) Date of filing: 24.04.2024
(51) Int. Cl.: H01M 4/131, C01B 25/30, H01M 4/1391, H01M 4/36, H01M 4/525, H01M 10/0525

(54) **COATED CATHODE ACTIVE MATERIAL AND PROCESS FOR MAKING THE SAME**

(30) Priority: 27.04.2023 SE 2350511
(71) Applicant: Northvolt AB, 112 47 Stockholm (SE)
(72) Inventor: Mangesh Korde, Prasad, 723 37 Västerås (SE); Semenova, Anna, 181 59 Stockholm (SE); Potter-Adams, Merlin, 112 33 Stockholm (SE)
(74) Representative: Engman, Eva Jessica

(57) **Abstract**

The disclosure provides a coated lithium intercalation cathode active material that is water-stable, and a method of forming said coated cathode active material. In particular, the coated cathode active material comprises an Li₃PO₄ coating. The coated cathode active material of the disclosure is suitable for use in aqueous electrode fabrication method.

## Description

### TECHNICAL FIELD

The disclosure relates to a process for coating a cathode active material that is water-stable, and a method of forming said coated cathode active material.

### BACKGROUND

Rechargeable or 'secondary' batteries find widespread use as electrical power supplies and energy storage systems. For example, in automobiles, battery packs formed of a plurality of battery modules, wherein each battery module includes a plurality of electrochemical cells, are provided as a means of effective storage and utilization of electric power.

Secondary cells such a lithium ion cells comprise a positive active material, or "cathode active material", and a negative active material or "anode active material" that form the electrochemically active components of the cathode and anode respectively.

Suitable cathode active materials include composites of nickel, cobalt and manganese or "NMC materials". These may also be referred to as "Li-NMC" materials when intercalated with lithium ions.

Typically, cathode active materials such as Li-NCM are fabricated by combining and calcining lithium, nickel, cobalt and manganese-containing precursors. The resultant material is then formed into an electrode (cathode) by combining the active material with a binder and optionally a conductive additive.

Often, Li-NMC materials are further functionalized in order to improve their properties. For example, it is known to coat Li-NMC with Li₃PO₄ to improve electrical and ionic conductivity properties. Known methods of coating Li-NMC with Li₃PO₄ tend to produce uneven and inhomogeneous coating layers which may result in uneven electrochemical reactions during cell and/or battery use.

Moreover, Li₃PO₄ coatings have poor stability in water. This means that it is difficult to use water as a solvent during cathode manufacturer, which limits the choice of binder and conductive additive to those which are not soluble in water only. This further means that organic solvents are predominantly used in cathode fabrication, which are associated with health and environmental hazards.

There is therefore a need for a cathode active material with improved coating homogeneity, wherein the coating has an improved stability in water.

### SUMMARY

The object of the present disclosure is to provides a coated cathode active material that is water-stable, and a method for fabricating said coated cathode active material. The resultant coating/coated cathode active material has decreased degradation in water, and is therefore suitable for use in an aqueous electrode fabrication process. This provides flexibility in the other electrode components, allowing for simpler and more cost-effective electrode preparation. An aqueous electrode fabrication method reduces or eliminates the need for organic solvents, which also reduces health and environmental concerns.

According to a first aspect of the disclosure is provided a lithium intercalation cathode active material coated with Li₃PO₄, wherein
the coated cathode active material is water-stable.

According to a second aspect of the disclosure is provided a method for fabricating a cathode active material coated with Li₃PO₄ comprising:
(a) mixing a lithium intercalation cathode active material;
   a phosphate source;
   a C₂-C₆ carboxylic acid;
   optionally a solvent; and
(b) calcining the mixture at 300-800°C.

According to a third aspect of the disclosure is provided a cathode active material coated with Li₃PO₄, obtained by a method comprising:
(a) mixing a lithium intercalation cathode active material;
   a phosphate source;
   a C₂-C₆ carboxylic acid;
   optionally a solvent; and
(b) calcining the mixture at 300-800°C.

While the disclosure is amenable to various modifications and alternative forms, specifics thereof have been shown by way of example and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description.

### BRIEF DESCRIPTION OF THE DRAWINGS

Figures 1A and 1B show the change in pH for water comprising uncoated and coated cathode active materials over time.
Figure 2 shows the difference in capacity retention for an uncoated cathode active material, and a coated cathode active material according to the disclosure.

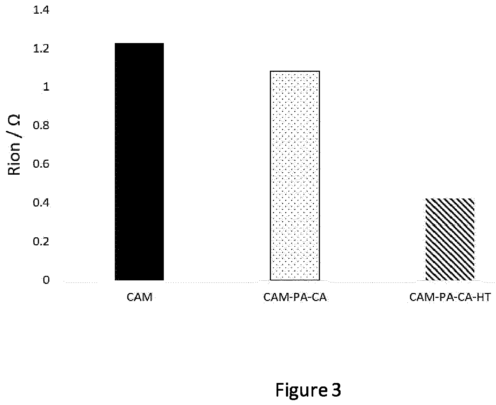

Figure 3 shows the difference in ion resistance for uncoated and coated cathode active materials.
Figure 4A and 4B shows TEM images of uncoated and coated cathode active materials.
Figures 5A and 5B shows XPS spectra for uncoated and coated cathode active materials.
Figure 6 shows the results of HF titration for uncoated and coated cathode active materials stored in an LiPF₆-containing electrolyte.
Figure 7A and 7B shows TEM images of a coating prepared by addition of a lithium source (7A), and a coating prepared from residual surface lithium (7B).
Figure 8 shows an example of how to measure coating smoothness from a TEM image.
Figures 9A and 9B shows TEM images of a coating prepared by addition of a lithium source (9A), and a coating prepared from residual surface lithium (9B) with a measurement of the coating thickness.
Figure 10 shows the change in pH a coated cathode active material prepared by addition of a lithium source vs a coating prepared from residual surface lithium.

### DETAILED DESCRIPTION

The coated cathode active material of the disclosure is water-stable. Accordingly, the coated cathode active material of the disclosure can be processed in water, such as when forming the cathode active layer. Typically, cathode active materials are processed into electrodes in organic solvents that are less environmentally friendly (e.g., toxic), for example N-methylpyrrolidone (NMP). The disclosure therefore provides a cathode active material that is environmentally friendly by reducing the use of toxic solvents.

Typical methods for forming coatings of Li₃PO₄ result in residual lithium on the surface of a cathode active material, usually present as LiOH or LiCO₃, which readily dissociates in water to give Li⁺. The dissolution of these residual lithium components destabilises the coating exposing the underlying material, leading to cathode active material degradation. By preparing the coating directly from residual lithium already present on the surface of the cathode active material, an improved water-stable coating with less residual lithium (and consequently inherently lower amounts of surface LiOH and Li₂CO₃) can be obtained.

By providing a C₂-C₆ carboxylic acid, a uniform coating of Li₃PO₄ on the surface of the cathode active material is achieved. A uniform coating contributes to the water-stability of the material by ensuring that all residual surface lithium is bound to a phosphate group. Furthermore, a uniform coating leads to a uniform electrochemical reaction for cells comprising the coated cathode active material.

Benefits of coated cathode active materials according to the disclosure inlucde improved cell performance via reduced internal resistance, , higher charge and discharge rates, improved capacity retention at higher charge rates, reduced metal dissolution via electrolyte side reactions and a prolonged lifetime.

The calcining step converts the amorphous Li₃PO₄ coating to a crystalline Li₃PO₄ coating. Crystalline forms of Li₃PO₄ are significantly more water-stable than the amorphous form.

The calcining step further removes residual C-O containing groups, such as carbonates, from surface of the cathode active material. Carbonates may be present in the form of Li₂CO₃ formed during washing of the cathode active material to remove residual lithium or it may originate from remaining C₂-C₆ carboxylic acid. Residual C-O containing groups are often lodged within amorphous Li₃PO₄ structures, and are removed in the formation of the crystalline phase of Li₃PO₄ during calcining.

The calcining step is therefore important for ensuring the stability of the Li₃PO₄ coating in water.

Accordingly, the Li₃PO₄ coating of the disclosure is itself water-stable, and the coated cathode active material of the disclosure is also water-stable.

### Cathode active material

The disclosure relates to a coated cathode active material and a method of producing said coated cathode active material.

In the context of the disclosure "cathode active material" refers to any material that is suitable for use as the electrochemically active material in a cathode, and suitable for use in a cell. The term "electrochemically active material" is to be understood as an electrochemical species which can be oxidized and reduced in a system which enables a cell to produce electric energy during discharge. The role of the cathode active material is to reversibly intercalate ions (such as lithium ions) during cell charge and discharge cycles.

The cathode active material of the disclosure is an intercalation material, wherein the intercalation metal is lithium.

Preferably the cathode active material is a transition metal complex such as nickel manganese cobalt oxide (NMC) material. Even more preferably, the cathode active material is an NMC material intercalated with lithium or an "Li-NMC" material.

Exemplary cathode active materials include nickel-cobalt-manganese (NMC) composite oxides and lithium NMC (Li-NMC) composite oxides or lithium nickel cobalt manganese (NMC) oxides (LiNi_{1xy}CoₓMn_{y}O₂ (0<x+y<1)).

The NMC material may be a doped NMC material, for example, the cathode active material may have the formula LiₓNiₐMn_{b}Co_{c}Mg_{d}MₑD_{f}O_{2-y}A_{y}, where 0.95<x<1.05, and where a+b+c+d+e+f=1, where 0.5≤a≤0.98, and where M is one or more metal dopants selected from the group consisting of Ti⁴⁺, Ta⁵⁺,Ru⁸⁺, Os⁸⁺ and Mo⁶⁺, and D is one or more metal dopants selected from the group consisting of Al, B, Ti, Cr, V, Fe, Ga, Zr, P, Nb and Sr, preferably Al, Zr and B, and c<0.1, 0.005≤d≤0.02, 0.01≤e≤0.05, 0≤f≤0.05, and wherein A is one or more element selected from the group consisting of S, N, F, Cl, Br, I, and P, and y≤0.1. The one or more metal dopants may advantageously have an oxidation state of 5 or more, and may preferably be Ta₂O₅ or MoO₃ or a combination thereof.

Preferably, the NMC material is high in nickel. Preferably, the mol % of nickel from amongst nickel, manganese and cobalt is 60% or more, for instance 70% or more, or greater than 80% or more. Even more preferably, the ratio may range from 80 mol% to 95 mol%.

In some embodiments, the cathode active material comprises lithium nickel cobalt manganese oxides (NMC) (Li_{b}Ni_{1-x-y-z}CoₓMn_{y}A_{z}O₂ (0<x+y+z< 1)), where A is an element other than Li, Ni, Co, Mn or O and wherein 0≤z≤0.05, preferably 0<z≤0.03, more preferably 0.001<z≤0.01, and wherein 0.9≤b≤1.2. A is one or more chosen from the group Al, B, Zr, Ba, Ca, Ti, Mg, Ta, Nb, V, Fe, Ru, Re, Pt and Mo. Preferably, A is chosen from the group Al and Zr.

In preferred embodiments, the NMC cathode materials are high in nickel. As such, the cathode active material typically comprises lithium nickel cobalt manganese oxides (NMC) represented by the formula Li_{b}Ni_{1-x-y-z}CoₓMn_{y}A_{z}O₂, wherein 0<x+y+z<0.4, preferably 0<x+y+z<0.25, and wherein 0≤z≤0.05, preferably 0<z≤0.03, more preferably 0.001<z≤0.01, and wherein 0.9≤b≤1.2. A is one or more chosen from the group Al, B, Zr, Ba, Ca, Ti, Mg, Ta, Nb, V, Fe, Ru, Re, Pt and Mo. Preferably, A is chosen from the group Al and Zr.

Preferably, the mol% of cathode active material from amongst cathode active material, phosphate source and C₂-C₆ carboxylic acid is from 90-99 mol%, for instance, from 92-99 mol%, from 94-99 mol%, or from 96-99 mol%. Preferably, the mol% of cathode active material from amongst the cathode active material, phosphate source and C₂-C₆ carboxylic acid is from 96-99 mol%.

The initials 'CAM' may be used to refer to the cathode active material throughout this disclosure.

### Phosphate source

The disclosure relates to a method of coating a cathode active material comprising a phosphate source.

In the context of the disclosure, "phosphate source" refers to a phosphate precursor that reacts with residual lithium to form Li₃PO₄.

Examples of suitable phosphate sources are H₃PO₄, (NH₄)₃PO₄, (NH₄)₂HPO₄ or NH₄H₂PO₄. Exemplary phosphate sources are acidic phosphate sources such as H₃PO₄ and (NH₄)₃PO₄.

Preferably, the mol% of phosphate source from amongst the cathode active material, phosphate source and C₂-C₆ carboxylic acid is from 0.01-8 mol%. For instance, from 0.01-6 mol%, such as from 0.01-4 mol%, or from 0.01-2 mol%. Preferably, the mol% of phosphate source from amongst the cathode active material, phosphate source and C₂-C₆ carboxylic acid is from 0.01-2 mol%.

The initials 'PA' may be used to refer to the phosphate source throughout this disclosure.

### C₂-C₆ carboxylic acid agent

The disclosure relates to a method of coating a cathode active material comprising a C₂-C₆ carboxylic acid, salt or ester thereof. A mixture comprising a C₂-C₆ carboxylic acid that is a liquid at room temperature may still be referred to as a dry mixture in the context of the disclosure.

Typically, it is difficult to form a homogenous mixture of the cathode active material and phosphate source. A homogenous mixture is beneficial as it leads to a uniform Li₃PO₄ coating.

By providing a C₂-C₆ carboxylic acid, mixing of the cathode active material and the phosphate source is improved.

Without wishing to be bound by theory, it is considered that the acid groups of the C₂-C₆ carboxylic acid bind to residual lithium on the surface of the cathode active material. This is a strong interaction that typically results in uniform coating. The uniform coating of the cathode active material particles with C₂-C₆ carboxylic acid facilitates uniform coating of the cathode active material with the phosphate source by improving the affinity of the phosphate source and the cathode active material. The carboxylic acid may be considered a 'chelating agent' in this respect, as it can bind the phosphate source in solution, bringing it into close proximity with the surface lithium groups. The carboxylic acid chelating agent may also promote crystallisation of the phosphate source on the surface by causing precipitation. This facilitates the reaction between the residual surface lithium and the phosphate source thereby providing improved coating formation. This is turn leads to a uniform Li₃PO₄ coating on the surface of the cathode active material.

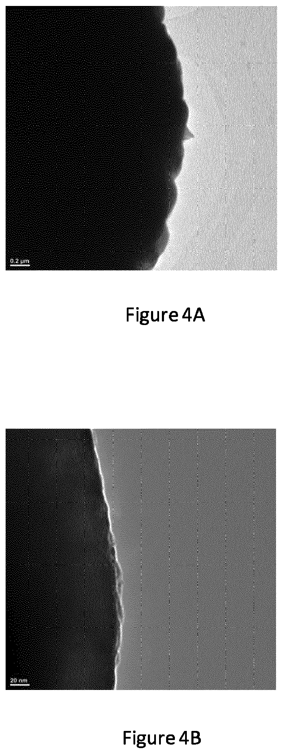

Figures 4A and 4B show TEM images of an uncoated cathode active material and a coated cathode active material according to the disclosure respectively. Despite the image of the coated cathode active material being at high magnification, the surface is visibly smooth and even, indicating that the coating is uniform.

Improved water stability may therefore be achieved for a coated cathode active material fabricated in a method comprising a C₂-C₆ carboxylic acid.

This effect is further enhanced when a wet method is used i.e., when solvent is used to mix the cathode active material and the phosphate source. Typically, the cathode active material and the phosphate source are difficult to disperse in the solvent.

By providing a C₂-C₆ carboxylic acid that is soluble in the solvent, dispersibility of the phosphate source and the cathode active material is improved. Without wishing to be bound by theory, the solvated C₂-C₆ carboxylic acid form a uniform coating on the surface of the cathode active material particle, improving its dispersibility in the solvent. Mixing of the C₂-C₆ carboxylic acid-coated cathode active material with the phosphate source is thus easier, and a uniformly coated cathode active material may be obtained.

Preferably, the C₂-C₆ carboxylic acid is soluble in the solvent used for mixing. Preferably, the ratio of carbon atoms to carboxylic acid groups in the C₂-C₆ carboxylic acid is less than 6:1, for instance 5.1, or 4:1. Preferably, the ratio of carbon atoms to carboxylic acid groups in the C₂-C₆ carboxylic acid is less that 4: 1.

Examples of suitable C₂-C₆ carboxylic acids are citric acid (C₆H₈O₇), acetic acid (CH₃COOH), malonic acid (CH₂(COOH)₂). Preferably, the C₂-C₆ carboxylic acid is citric acid.

Preferably, the mol% of C₂-C₆ carboxylic acid from amongst cathode active material, phosphate source and C₂-C₆ carboxylic acid is from 0.005-3 mol%, for instance from 0.01-3 mol%, such as from such as from0.01-2 mol%, such as from 0.01-1 mol%, or from 0.05-1 mol%. Preferably, the mol% of C₂-C₆ carboxylic acid from amongst cathode active material, phosphate source and C₂-C₆ carboxylic acid is from 0.05-1 mol%.

The initials 'CA' may be used to refer to the carboxylic acid throughout this disclosure.

### Coated cathode active material

The cathode active material of the disclosure is coated with Li₃PO₄.

Residual lithium on the surface of the cathode active material particles reacts with a phosphate source to form the Li₃PO₄ coating.

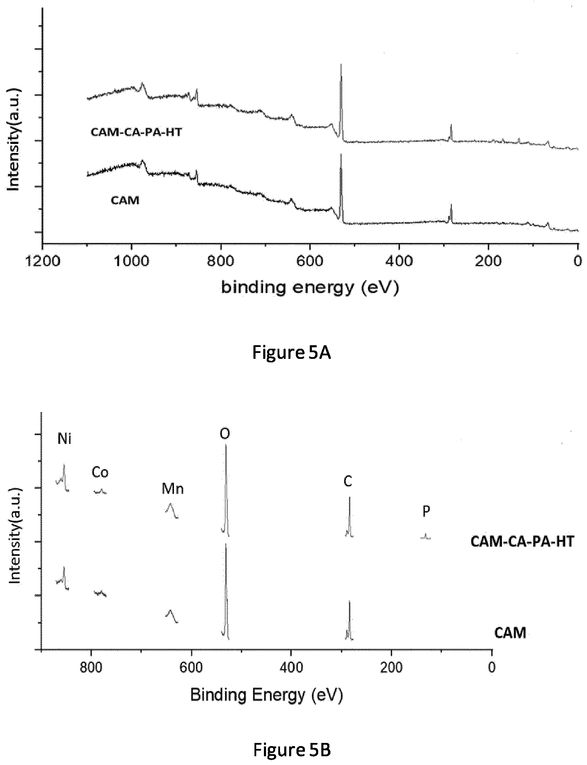

The presence of the coating was confirmed by XPS. Figure 5A shows XPS spectra for uncoated cathode active materials (bottom) and an equivalent cathode active material coated according to the disclosure (top). Figure 5B shows the elements to which the peaks in the spectra of Figure 5A correspond. The XPS spectra show a clear phosphorus peak for coated cathode active materials, wherein phosphorus is detectable at around 2% (atomic weight%). There is no phosphorus peak present for the uncoated cathode active material.

In the context of the disclosure, "coating" or "coated" refers to a cathode active material wherein the cathode active material particle surfaces comprise Li₃PO₄.

Benefits of providing a cathode active material coated with Li₃PO₄ include improved electronic properties such as ion conduction, improved thermal stability and thus improved cell and/or battery performance. The Li₃PO₄ coating also protects the cathode active material from side-reactions with the electrolyte and therefore provides improved capacity retention thus prolonging cell lifetime.

Preferably, the cathode active material of the disclosure comprises a uniform Li₃PO₄ coating.

In the context of the disclosure "uniform" with respect to the coating, refers to a cathode active material wherein the majority of the residual lithium is converted Li₃PO₄. For example, a uniform coating may be a coating in which about 70% or more of residual lithium is converted to Li₃PO₄, for instance, about 80% or more, about 90% or more, or about 95% or more.

A uniform coating facilitates an even electrochemical reaction and prevents mechanical degradation of the cathode active material particles and/or electrodes.

The Li₃PO₄ coating is formed by residual lithium on the surface of the cathode active material reacting with the phosphate source to form a lithium phosphate group.

The residual lithium may be by-product of fabricating the lithium-intercalated cathode active material. Typically, residual lithium is present as Li⁺ on the surface of the cathode active material particles.

During cathode active material formation, it is common to attempt to remove said residual lithium by washing the cathode active material in water. A disadvantage of this is that during washing, Li⁺ is converted to LiOH and Li₂CO₃ on the surface of the cathode active material.

A further concern is that any residual lithium not removed during the washing step, remains on the surface of the cathode active material. This may cause down-stream problems such as during electrode processing in a water-based slurry.

Typically the Li₃PO₄ coating will be prepared after the washing step in cathode active material formation.

The LiOH/Li₂CO₃ moieties formed during the washing step may be converted to Li₃PO₄, or they may remain on the surface. This is typically a very small amount which is unlikely to have a significant effect on cell and/or battery performance.

The main purpose of the coating step is to avoid the formation of new LiOH/Li₂CO₃ moeities during processing in a water-based slurry.

Processing in a water-based slurry will cause further LiOH and Li₂CO₃ moeities to form. LiOH and Li₂CO₃ are not water stable. If a cathode active material comprising LiOH and Li₂CO₃ on the surface is brought into contact with water, LiOH and Li₂CO₃ dissociate, and the integrity of cathode active material is at risk.

The problem is therefore self-propagating; once the cathode active material begins to break down in the water-based slurry, more lithium becomes available for conversion to LiOH and Li₂CO₃.

For most cathode active materials, it is therefore impractical to prepare an electrode via water-based slurry.

However, these moieties may be converted into Li₃PO₄ by introducing a phosphate source.

Preferably, the Li₃PO₄ coating is formed solely from the residual lithium on the surface of the cathode active material and a phosphate source. That is, preferably, no additional lithium is added in forming the Li₃PO₄ coating.

For example, the Li₃PO₄ coating is formed by a reaction between LiOH and/or Li₂CO₃ on the surface of the cathode active material and a phosphate source such as H₃PO₄, (NH₄)₃PO4, (NH₄)₂HPO₄ or NH₄H₂PO₄.

By forming the coating from residual surface lithium, an integral Li₃PO₄ coating is formed rather than a capping layer.

In an exemplary embodiment, the Li₃PO₄ coating is an integral Li₃PO₄ coating.

Known methods of forming a Li₃PO₄ coated cathode active materials, such as that described in *"*Li3PO4 surface coating on Ni-rich LiNi0.6Co0.2Mn0.2O2 by a citric acid assisted sol-gel method: Improved thermal stability and high-voltage performance", 2017, Suk-Woo Lee *et al.* (Suk-Woo Lee *et al*.)*,* rely on the addition of a lithium source. For example, the method of Suk-Woo Lee requires the addition of LiNO₃ as well as a phosphate source in order to form the coating.

Such a method simply caps the surface lithium groups with an Li₃PO₄ shell than converting the groups to a water-stable Li₃PO₄ coating layer. Not only does this require addition lithium to form a coated cathode active material which is inefficient, expensive and environmentally damaging, it also produces a different, less water-stable product.

The coated cathode active material of the disclosure therefore provides an advantage over known Li₃PO₄ coated cathode active materials.

Example 4 demonstrates the advantage of using residual lithium to form the Li₃PO₄ coating. By using the residual lithium, LiOH and Li₂CO₃ groups are consumed during the process thereby eliminating or reducing the concentration these groups from the surface. This is not the case when additional lithium is added to form the coating. Accordingly, an Li₃PO₄ coating formed in method such as that of Suk-Woo Lee *et al.* have due to a relatively higher concentration of LiOH and Li₂CO₃ remaining on the surface, or close to the surface under the Li₃PO₄.

Coating uniformity can be estimated from the relative amount of LiOH or Li₂CO₃ dissociated when a coated cathode active material is placed in water. A low amount of LiOH or Li₂CO₃ detected in the water indicates that the uniformity of the coating is high (i.e., a large amount of the residual lithium/surface LiOH or Li₂CO₃ has been converted to Li₃PO₄).

Any suitable method may be used to determine the relative amount of LiOH or Li₂CO₃, for example titration methods specific for quantification of LiOH or Li₂CO₃ respectively. Suitable titration methods are known in the art, for example equivalence point titration methods.

The residual LiOH and Li₂CO₃ measured in a titration experiment provides an approximation of the amount of LiOH and Li₂CO₃ on the surface of the particles (wt%) i.e. the residual lithium that is responsible for poor water stability. The result will be dependent on the size and size distribution of the particles. If a sample comprises smaller particles the combined surface area will be larger and therefore the quantity of LiOH and Li₂CO₃ measured will also be higher. Accordingly, the best comparison is to calculate the LiOH and Li₂CO₃ concentration as a function of the surface area.

The specific surface area (SSA) of the cathode active material may be determined via BET isotherm. Preferably, a multi-point nitrogen absorption isotherm is used. For instance, a suitable method comprises collecting data over a relative pressure range of 0.05 to 0.3 PIPe and the surface area is calculated using the entire range of PIPe values measured. The SSA is then divided by the mass to provide the 'BET surface area' in m²/g.

The BET surface area may also be used as an indication that a coating has been formed. For example, prior to coating, a cathode active material may have a BET surface area of around 1.6-1.7m²/g. In contrast, a coated cathode active material may have a BET surface area of around 0.7-0.9 m²/g. These values are of course only exemplary, and the methodology of the disclosure may be used on particles having higher or lower surface areas.

Preferably, the coated cathode active material is the disclosure has an LiOH surface concentration of 0.2wt% per m²/g or less, for instance 0.18wt% per m²/g or less, or 0.15wt% per m²/g or less.

In an exemplary embodiment, the coated cathode active material of the disclosure has a LiOH concentration of around 0.14wt% per m²/g. Preferably, the coated cathode active material of the disclosure also has an Li₂CO₃ concentration of around 0.25wt% per m²/g.

In comparison, the comparative example of Example 4 has an LiOH concentration of around 0.23wt% per m²/g and an Li₂CO₃ of around 0.20wt% per m²/g.

Li₃PO₄-coated cathode active materials according to the disclosure i.e. an integral coating, have significantly less LiOH on the surface compared to coated cathode active material that have are formed by addition of lithium. This leads to a coated cathode active material with improved water stability.

The Li₃PO₄ coated cathode active materials of the disclosure also exhibit improved coating smoothness compared to those prepared by the addition of lithium. Without wishing to be bound by theory, this is considered to be because the residual lithium is used to form the coating and because the carboxylic acid facilitates the formation of a highly uniform coating due to its chelating properties.

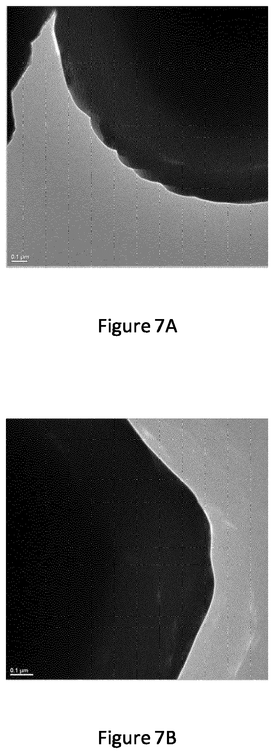

Figures 7B and 7A show TEM images of a cathode active material for according to the disclosure (including a phosphate source, carboxylic acid and calcination) and a cathode active material formed by the same method but including LiNO₃ in the coating forming step to represent a material produced by the method of Suk-Woo Lee *et al* respectively.

As can be seen in Figure 7B, the coating on the material according to the disclosure is highly uniform and smooth. It is considered that this provides improved water stability as there are no 'weak points' in the coating through which water can penetrate.

The quantitative 'smoothness' of the coating will be dependent on the particle size and curvature. In general however, the 'smoothness' of the surface may be estimated by evaluating the fluctuations from a circular circumference of the depression profile extracted from a transmission electron microscopy (TEM) image.

For example, when the particles are substantially spherical, the dimensions (depth and length) of depressions or 'valleys' on the surface of the particle may be measured and used to estimate the smoothness.

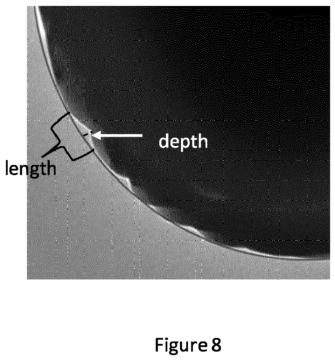

To do this, the surface of the particle circumference is estimated with a solid line around the outer-most edge of the particle (forming a circle encompassing the particle including any protrusions, shown in Figure 8). The distance between the solid line and the bottom of a valley is measured to give the valley depth. The valley length is found by measuring the distance between the position at which the two protrusions either side of the valley intersect the solid line. Enough particles should be measured such that the dimensions of 10 valleys are collected (preferably 20 valleys).

To be considered 'smooth' the mean valley should have a length that is more than 3.0 times its depth, for example more than 4.0 times its depth or more than 4.5 times its depth.

The coating of the disclosure also provides excellent water-stability despite being thinner than coatings prepared in a method that requires addition of a lithium source. Again, the conversion of residual lithium to Li₃PO₄ rather than capping with surface with an Li₃PO₄ coating, as well as the improved coating quality due to the chelating carboxylic acid, is considered the reason.

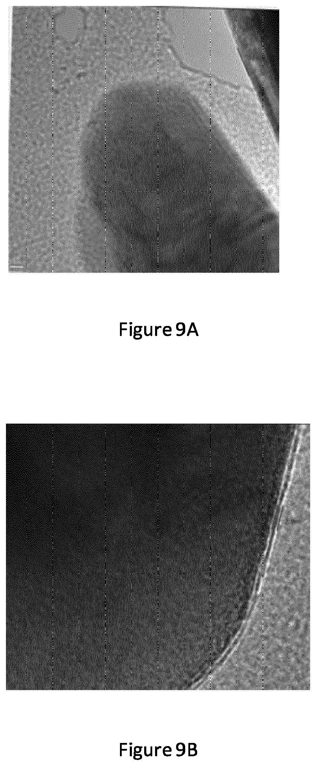

The samples for Figures 9A and 9B are TEM images of the coating thickness of the samples prepared for Figures 7A and 7B respectively. Figures 9A and 9B show that for a coating formed from residual surface lithium, a thinner coating is formed (2nm vs 3nm, Figure 9B vs 9A respectively).

In batteries, it is beneficial to include the maximum amount of electrochemically active cathode active material possible to ensure maximum capacity. Li₃PO₄ does not contribute to capacity and therefore a minimum amount of the Li₃PO₄ coating to provide water stability is desired. Accordingly, providing a thinner water-stable coating is highly beneficial. The cathode active material of the disclosure provides this advantage, along with providing superior water stability at the same time.

Preferably, the coated cathode active material wherein the coating thickness is less than 3nm, for instance 2.8nm or less, 2.5nm or less, 2.2 nm or less, or 2nm or less.

The coating thickness may be measured from a TEM image of the cathode active material particles. For example, the coating thickness may be measured for ten different particles and a mean coating thickness of the ten particles may be calculated.

In addition to providing water stability, the Li₃PO₄ coating also provides improved HF scavenging properties thereby protecting the CAM from transition metal dissolution. Due to the enhanced uniformity and a reduced thickness of the integral Li₃PO₄ coating of the disclosure, the HF scavenging properties are improved compared to known Li₃PO₄ coatings.

The disclosure also relates to a method of forming a water-stable coated cathode active material. To form the coating, a mixture of cathode active material, a phosphate source, and a C₂-C₆ carboxylic acid is formed.

In some embodiments, the Li₃PO₄ coating may be further functionalized by a reaction with, for example, boron, aluminum, or cobalt. In such a case, the water stable Li₃PO₄ coating of the disclosure is an intermediate in the process.

The functionalized coating will inherit the water-stability properties of the Li₃PO₄ coating.

### Method

The coated cathode active material of the disclosure may be formed by combining a cathode active material with a phosphate source, a C₂-C₆ carboxylic acid, and optionally a solvent.

An example of a method of forming the coated cathode active material of the disclosure comprises:
(i) Mixing:
   a cathode active material;
   a phosphate source; and
   a C₂-C₆ carboxylic acid;
(ii) calcining the mixture at 300-800 °C.

Mixing a cathode active material, a phosphate source and a C₂-C₆ carboxylic acid provides a cathode active material uniformly coated with Li₃PO₄.

Preferably, the reactants consist of a lithium intercalation cathode active material, a phosphate source and a C₂-C₆ carboxylic acid.

Preferably, the coating is formed by a reaction between the phosphate source and LiOH and/or Li₂CO₃ groups on the surface of the cathode active material.

More preferably, the Li₃PO₄ coating is formed in a method wherein no lithium source is added in step (a). In the context of the disclosure, a lithium source is any lithium-containing compound that can react with a phosphate source to form Li₃PO₄. An example of a lithium source is LiNO₃.

This ensures the formation of an integral Li₃PO₄ coating rather than a capping layer of Li₃PO₄.

The calcination step is performed after formation of the Li₃PO₄ coating in order to remove any remaining C-O containing groups from the surface of the coated cathode active material.

C-O containing groups may originate from residual lithium groups such as Li₂CO₃, or they may originate from the C₂-C₆ carboxylic acid.

Without removal of the C-O groups, the Li₃PO₄ coating is not water-stable and is prone to degradation. Removal of C-O groups is therefore necessary for providing an Li₃PO₄-coated coated cathode active material with is water-stable.

In the context of the disclosure, "calcination" refers to heating the coated cathode active material to a temperature of over 300 °C for at least 30 minutes. The calcination step should be carried out at a high enough temperature and for a length of time sufficient to provide a water-stable coated cathode active material by removal of sufficient C-O groups.

For example, the calcination step may be carried out for between 30 minutes and 4 hours, for instance between 45 minutes and 3 hours, between 1 hour and 2 hours. Preferably the calcination step is carried out for at least 1 hour.

The calcination temperature may be between 300 and 800 °C, for instance between 350 and 750 °C, or between 400 and 700°C. Preferably the calcination temperature is at least 300 °C.

The temperature of the calcining step should be suitable for obtained the descried properties, which may depend on the type of underlying cathode active material. Typically, cathode active materials with a high nickel content require a higher calcination temperature to form a coating according to the disclosure.

Preferably, the calcination step is carried out in air.

The initials 'HT' may be used to refer to the calcination step throughout this disclosure.

In some embodiments, the cathode active material, phosphate source and C₂-C₆ carboxylic acid are mixed with a solvent.

When present, the solvent may be added at any time during mixing. For example, in some embodiments, that cathode active material, phosphate source and C₂-C₆ carboxylic acid are added to the solvent at the same time.

Alternatively, in some embodiments, a slurry of cathode active material and solvent is first formed, and the phosphate source and C₂-C₆ carboxylic acid are added at a later stage.

Mixing the cathode active material, phosphate source and C₂-C₆ carboxylic acid with a solvent may provide for a more homogeneous mixing of the components and may therefore result in the forming of a more uniform Li₃PO₄ coating.

In the context of the disclosure, "solvent" relates to a compound or mixture of compounds that can solvate the C₂-C₆ carboxylic acid. Preferably, the solvent can also disperse or the cathode active material and the phosphate source.

The solvent may be one solvent or a mixture of solvents. Preferably the solvent comprises a low molecular weight polar solvent, for example an alcohol, ketone, ester or aromatic compound and water. Even more preferably, the solvent comprises a low molecular weight alcohol and water. The term "low molecular weight" is used to refer to a compound with a molecular weight of 100 g/mol or less.

Preferably, the solvent is a green solvent (or combination of solvents), for example a non-toxic or environmentally friendly solvent.

Common solvents for processing cathode active materials include N-methyl-2-pyrrolidine (NMP). NMP is toxic and is regarded as a health hazard. It is therefore preferable to provide a method for processing a cathode active material that does not require the use of toxic solvents. Preferably, the solvent is non-toxic. Preferably, the solvent does not comprise NMP.

Examples of suitable solvents comprise water, methanol, ethanol, propanol, butanol, acetone, acetonitrile or mixtures thereof. Exemplary solvents comprise ethanol (CH₃CH₂OH), isopropyl alcohol CH₃CH₂CH₂OH), water and mixtures thereof.

Preferably, the solvent comprises water and at least one of methanol, ethanol, propanol, butanol, acetone, acetonitrile or mixtures thereof.

Preferably, the solvent consists of water and a low molecular weight alcohol.

Preferably, the solvent consists of water and ethanol.

Preferably, the solvent consists of water and isopropyl alcohol.

Preferably, the solvent consists of ethanol, isopropyl alcohol and water.

Preferably, the method of the disclosure comprises the minimum amount of solvent needed to disperse the dry components. For example, when present, the mixture may comprise around 1-20 wt% solvent, for instance 2-15 wt%, or 5 to 10 wt %. Preferably, when present, the mixture comprises 5 to 10 wt % solvent.

In some embodiments, there is a sintering step performed before the calcining.

In the context of the disclosure, sintering refers to heating in air to between 50 and 300 °C. Preferably, sintering is carried out at around 60-280 °C, 70-250 °C, or 80-200 °C. Preferably, sintering is carried out at 80-200 °C.

Sintering is carried out in order to remove any residual moisture before calcination. Sintering is therefore essential when a solvent is used, however it may also be beneficial when a dry method is used. By removing residual solvent, sintering prevents impurities from being trapped in the coated cathode active material during calcination.

If too may impurities remain in the cathode active material, it may have a consequence on the performance of a cell and/or battery comprising the cathode active material. Accordingly, a coated cathode active material formed by a method comprising a sintering step may have improved properties.

### Water-stable

The coated cathode active material, and the Li₃PO₄ coating of the disclosure, is water-stable. Accordingly, the water-stable coated cathode active material may be processed in water.

In the context of the disclosure, "water-stable" or "water stability" refers to the insolubility of the coated cathode active material in a solution comprising water. For instance, improved water stability may refer to a reduced degree of degradation of the cathode active material and/or reduced degradation of the Li₃PO₄ coating in a solution comprising water.

The presence of C-O groups on the surface of the coated cathode active material contribute to the instability of Li₃PO₄-coated cathode active materials. Removal of the C-O groups can be considered associated with providing a water-stable Li₃PO₄ coating.

Uniform coating of the cathode active material with a water-stable Li₃PO₄ protects the underlying cathode active material from degradation. Removal of residual lithium on the surface of the cathode active material is therefore associated with providing a water-stable coated cathode active material.

When an uncoated cathode active material is placed in water, residual lithium on the surface will typically cause an increase in the pH of water due to liberation of, for example, hydroxide (OH-) groups. When residual lithium groups have been converted to Li₃PO₄, the stable complex does not dissociate, and thus the pH of the water is largely unchanged.

Furthermore, when an uncalcined Li₃PO₄-coated cathode active material is placed in water, residual C-O containing groups, such as carbonates, may also be liberated again causing an increase in the pH.

Accordingly, the change in the pH of water comprising a cathode active material can be used to estimate its water stability.

In particular, "water-stable" refers to a coated cathode active material that does not cause a change in water pH of more than 0.3 pH units in 12 hours when dispersed at 1:2 w/w in water at 25°C, or alternatively, that does not cause a water pH change of more than 3% in 12 hours when dispersed at 1:2 w/w in water at 25°C.

By "does not cause a change in water pH" is meant that the pH does not change by more than the stated amount between the pH measured 1 minute after dispersion to the pH measured 12 hours after dispersion.

An example method for testing the water-stability of the cathode active material comprises:
- Combining 10g powdered cathode active material and 20g deionized water, wherein the water is at 25°C prior to adding the cathode active material; and
- Taking a pH measurement immediately after (for instance 1 minute after) combining and at 12 hours.

Preferably, pH measurements are taken as accurately as possible, for example with a digital pH meter.

Typically, adding an NMC material to water will instantly increase the pH of the water, for example to a pH of around 10-12 measured 1 minute after dispersing in water.

Over time, as the cathode active material degrades, the pH of the water increases. A slower increase in pH indicates that the material is more water stable.

Water-stable cathode active materials according to the disclosure will cause a slight change in pH over time, however the change is gradual and minimal.

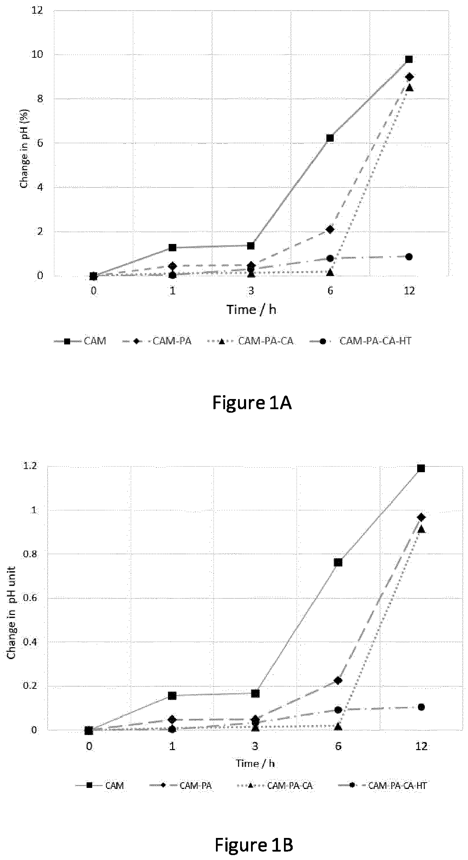

This is demonstrated in Figure 1A wherein the % change in pH unit over time is shown. For the coated cathode active material of the disclosure, the total % change in pH after 12 hours is less than 3 %, whereas for uncoated materials, or materials comprising non-water stable coatings, that total % change in pH is about 9%.

Accordingly, water stable according to the disclosure may refer to a material that causes a change in water pH of less than 3% after 12 hours, preferably less than 2% after 12 hours, even less than 1.5% after 12 hours, all when dispersed at 1:2 w/w in water at 25°C.

The change in pH may also be expressed as the change in pH unit over time. This is shown Figure 1B wherein uncoated cathode active materials, and cathode active materials with non-water stable coatings show a sudden, sharp increase in the pH of water after 12 hours indicating substantial breakdown.

Water-stable according to the disclosure may also refer to a cathode active material that causes a water pH change of less than 0.3 pH units after 12 hours, preferably less than 0.2 pH units after 12 hours, even less than 0.15 pH units after 12 hours, all when dispersed at 1:2 w/w in water at 25°C.

Despite the largest difference between the samples occurring after 12 hours, the results show that the water-stable cathode active material causes a smaller change and % change in pH at the 1-hour and 3-hour time intervals. Accordingly, measuring the pH change after 12 hours is suitable for determining the water stability of cathode active materials, and may provide the most reliable results due to the significant breakdown of non-water-stable materials at this time interval.

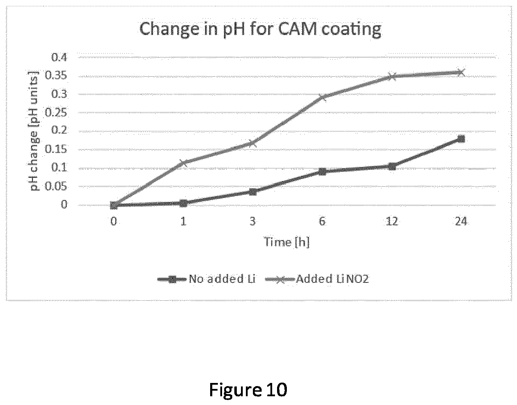

Using residual lithium to form the coating rather than adding additional lithium provides improves water stability. Figure 10 shows a comparison of a sample prepared according to the disclosure (phosphate source, carboxylic acid and calcination) and a sample prepared in an identical method but with the addition of LiNO₃ in the coating forming step. The pH stability test outlined above was performed on both samples.

As can be seen in Figure 10, the sample with a coated prepared from residual lithium is significantly more stable in water than the sample prepared with additional lithium at all time intervals. This is despite the coating being thinner as evidence by Figures 9A and 9B.

Accordingly, the coated cathode active material of the disclosure may be a lithium intercalation cathode active material coated with Li₃PO₄, wherein
the coated cathode active material is water stable, wherein water-stable means cathode active material that does not cause a change in water pH of more than 0.3 pH units in 12 hours when dispersed at 1:2 w/w in water at 25°C, and wherein
the coating thickness is less than 3nm.

In some instance, the pH of the water will reach 14 before testing is complete. In such instance, electrical performance may be used to determine whether the material is water stable.

For instance, the comparative testing to determine of whether an electrode prepared from a water-based slurry has the substantially the same properties as an electrode prepared from an NMP-based slurry may be carried out.

For example, a suitable electronic property to test is the capacity retention of a half cell with a cathode comprising said cathode active material to be tested, after one charge/discharge cycle at 0.1C.

In this context, a cathode active material may be considered water-stable if the capacity retention of an electrode prepared from a water-based slurry is the same or greater than the capacity retention of an electrode prepared from an NMP-based slurry.

The advantage of providing a water-stable cathode active material is that more environmentally friendly cell and/or battery fabrication is possible.

To produce an electrode, a cathode active material, a binder and optionally a conductive additive are typically dispersed in an electrode dispersant to form a slurry. The slurry is then deposited on a current collector to form the electrode. Typically, the binder choice is limited to those that are soluble in electrode dispersants that do not degrade the cathode active material. Most cathode active materials are not water-stable and as such, it is uncommon to use fabricate electrode via an aqueous method.

By providing a cathode active material that is stable in water, a wider range of binder options are available for electrode formation. The range of binders available may have improved electronic properties, better binding properties or may reduce costs.

Furthermore, aqueous processes are generally considered greener and more environmentally friendly due to a reduction in organic solvent use. Currently, if an aqueous method is to be used, some degradation of the cathode active material is inevitable due to its instability in water. Cathode active material degradation results in loss of product, and wastes resource such that it may counteract the environmental benefit of reducing organic solvent use.

By providing a water-stable cathode active material, an environmentally friendly processing method may be provided by way of reducing organic solvent use and limiting cathode active material loss by degradation.

Moreover, if the electrodes are to be recycled, the cathode active material and the conductive additive must be released by breaking down the binder. The binder in an electrode fabricated in an aqueous process may be broke down with water. A water-stable cathode active material therefore also reduces the environmental impact at the recycling stage, again by reducing or eliminating organic solvent use.

### EXAMPLES

### Example 1

- NMC active material particles and (NH₄)₃PO₄ and citric acid were mixed in a mol% ratio of 90-99:0.01-1:0.005-1.
- The mixture was dry mixed for 20-60 minutes and sintered at 60-200 °C for 1-6 hours.
- Once dry, the resultant material was calcined in air at 350-700 °C for 4-9 hours to remove impurities and make the Li₃PO₄ layer water stable.

### Example 2

- NMC active material particles, H₃PO₄ and citric acid were mixed in a mol% ratio of NMC:H₃PO₄:citric acid of 96-99:0.01-2:0.005-1.
- A minimum amount of water/ethanol (80:20 weight ratio) was added, and the mixture was stirred for 20-60minutes at 40-90°C.
- The combined mixture was vacuum dried at 60-200 °C for 1-6 hours to remove the solvent.
- Once dry, the resultant material was calcined in air at 400-700 °C for 4-9 hours to remove impurities and make the Li₃PO₄ layer water stable.

For the following examples, the samples are named as follows:
- CAM = uncoated cathode active material
- CAM-PA = coated cathode active material prepared via a method comprising mixing CAM and a phosphate source
- CAM-PA-CA = coated cathode active material prepared via a method comprising mixing CAM, a phosphate source and a C₂-C₆ carboxylic acid
- CAM-PA-CA-HT = coated cathode active material prepared via a method comprising mixing CAM, a phosphate source and a C₂-C₆ carboxylic acid, followed by a calcining step

### Example 3

Water stability was tested by monitoring the change in pH for water comprising powdered cathode active material.

### pH unit with time

**Table 1A**

| **Sample** | **(0) Instant** | **1hour** | **3hours** | **6hours** | **12hours** |
|---|---|---|---|---|---|
| 1 - CAM | 12.132 | 12.288 | 12.298 | 12.892 | 13.321 |
| 2 - CAM-PA | 10.75 | 10.798 | 10.801 | 10.976 | 11.719 |
| 3 - CAM-PA-CA | 10.727 | 10.738 | 10.741 | 10.747 | 11.644 |
| 4 - CAM-PA-CA-HT | 11.697 | 11.701 | 11.732 | 11.789 | 11.801 |

### Change in pH unit over time

**Table 1B**

| **Sample** | **0 (Instant)** | **1hours** | **3hours** | **6hours** | **12hours** |
|---|---|---|---|---|---|
| 1 - CAM | 0 | 0,156 | 0,166 | 0,76 | 1,189 |
| 2 - CAM-PA | 0 | 0,048 | 0,051 | 0,226 | 0,969 |
| 3 - CAM-PA-CA | 0 | 0,011 | 0,014 | 0,02 | 0,917 |
| 4 - CAM-PA-CA-HT | 0 | 0,004 | 0,035 | 0,092 | 0,104 |

### % Change in pH over time

**Table 1C**

| **Sample** | **0 (Instant)** | **1hours** | **3hours** | **6hours** | **12hours** |
|---|---|---|---|---|---|
| 1 - CAM | 0 | 1,29 | 1,37 | 6,26 | 9,80 |
| 2 - CAM-PA | 0 | 0,45 | 0,47 | 2,10 | 9,10 |
| 3 - CAM-PA-CA | 0 | 0,10 | 0,13 | 0,19 | 8,55 |
| 4 - CAM-PA-CA-HT | 0 | 0,034 | 0,030 | 0,70 | 0,89 |

Tables 1A to 1C, and Figures 1A and 1B shows that uncoated cathode active materials cause the largest pH shift of all the samples, indicating instability in water.

It can also be seen that forming an Li₃PO₄ coating by contacting a cathode active material with a phosphate source improved the water stability, and including a C₂-C₆ carboxylic acid in the coating process further improves the stability (sample 3).

By also calcining the resultant material and forming a coated cathode active material according to the disclosure, the water stability is further improved (sample 4).

Tables 1B and 1C show that regardless of how the pH change is compared, the coated cathode active material of the disclosure causes a smaller change. This indicates that the cathode active material of the disclosure degrades to a lesser degree upon contact with water and that it is water stable.

Accordingly, the coating of the disclosure may used to prevent cathode active material degradation by providing a water-stable material.

### Example 4

Titration measurements were carried out for determining coating uniformity. There are fewer free residual lithium groups for coated cathode active materials, and as such, less lithium leaches into the water. Accordingly, a lower amount of LiOH and Li₂CO₃ detected in the titration experiment is indicative of a more uniform coating.

**Table 2**

| **Sample** | **LiOH wt%** | **Li₂CO₃ wt%** | **Li wt%** |
|---|---|---|---|
| 1 - CAM | 0.185 | 0.300 | 0.11 |
| 2 - CAM-PA | 0.175 | 0.216 | 0.091 |
| 3 - CAM-PA-CA | 0.132 | 0.200 | 0.075 |
| 4 - CAM-PA-CA-HT | 0.100 | 0.178 | 0.062 |
| 5 - Comparative example | 0.212 | 0.187 | - |

Table 2 shows that the LiOH and Li₂CO₃ detected is significantly lower for cathode active materials coated in a method comprising contacting the CAM with a phosphate source (PA) (sample 1 vs samples 2-4). This indicates that the cathode active materials of samples 2-4 are coated with Li₃PO₄.

Inclusion of a C₂-C₆ carboxylic acid in the coating process provides further decreases the wt% of LiOH/Li₂CO₃ (sample 2 vs sample 3). This indicates that including a C₂-C₆ carboxylic acid in the preparation of the coating improves coating uniformity.

Calcining the material is shown to further improve coating uniformity (sample 3 vs sample 4).

The comparative example represents particles prepared in the method described in Suk-Woo *et al.* The method of preparing the comparative example is identical to the method used to prepare sample 4 except that LiNO₃ was added during the mixing step. Without wishing to be bound by theory, it is considered that omitting the additional lithium and instead using the residual lithium to form the coating provides a CAM with improved coating uniformity and improved water stability. This is demonstrated by the lower amount of LiOH and Li₂CO₃ measured in the titration experiment (comparative example vs samples 2-4) for samples prepared according to the disclosure vs the comparative example.

Sample 4 of Table 2 has a BET surface area of around 0.7m²/g and sample 5 of around 0.9m²/g.

The leads to a normalized LiOH concentration of around 0.14wt% per m²/g for sample 4, and around 0.23wt% per m²/g for sample 5.

### Example 5

Coin cells were prepared in order to test the electronic properties of cathodes comprising the coated cathode active material of the disclosure. The results were compared to a coin cell comprising an uncoated cathode active material.

Details of the coin cell:
- Cathode: 90-99% cathode active material; 1-8% binder; 0.2-3% conductive additive
- Cathode diameter: 14mm
- Anode: Lithium chip
- Anode diameter: 16mm
- Separator: ceramic
- Separator thickness: Sum - 120um
- Rest time: 6-24 hours (before charging/discharging)
- Test temperature: 25 °C
- Charge rate: 0.2C
- Discharge rate: 0.5C-10C

**Table 3A**

| **CAM** | | |
|---|---|---|
| Discharge capacity (mAh/g) | C-Rate | % Retention |
| 203,04 | 0,5 | 100,000 |
| 196,1 | 1 | 96,582 |
| 191,2 | 2 | 94,169 |
| 181,67 | 4 | 89,475 |
| 120,765 | 6 | 59,478 |
| 65,896 | 10 | 32,455 |

**Table 3B**

| **CAM-CA-PA-HT** | | |
|---|---|---|
| Discharge capacity(mAh/g) | C-Rate | % Retention |
| 205,8 | 0,5 | 100,000 |
| 200,384 | 1 | 97,368 |
| 195,757 | 2 | 95,120 |
| 190,73 | 4 | 92,677 |
| 186,93 | 6 | 90,831 |
| 176,639 | 10 | 85,830 |

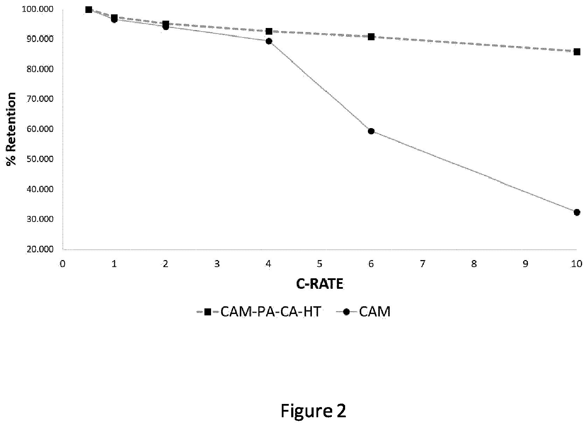

Tables 3A and 3B, as well as Figure 2, show that capacity retention is improved for cathode comprising the coated cathode active material of the disclosure. Without wishing to be bound by theory, it is considered that this is partially due to improved cathode active material integrity (e.g. the cathode active material is protected from physical damage due to the coating), and partly due to the crystalline Li₃PO₄ coating free from C-O containing groups has improved lithium ion conductance.

Accordingly the coating of the disclosure may be used to improve lithium ion conductance.

### Example 6

Electronic impedance spectroscopy was carried out to test the difference in ionic conductance for cathode active materials that are (i) uncoated, (ii) coated without calcining and (iii) coated according to the disclosure.

Fresh coin cells were prepared according to the details in Example 5, wherein the cathode active material was:
- Sample 1 - CAM
- Sample 2 - CAM-PA-CA
- Sample 3 - CAM-PA-CA-HT

Figure 2 shows that ion resistance is decreased by coating the cathode active material with Li₃PO₄ (sample 1 vs samples 2 and 3).

Without wishing to be bound by theory, it is considered that the providing a uniform cathode active material decreases ion resistance by providing continuous and homogenous transport pathways for lithium ions (sample 2). Accordingly, method features shown to improve the uniformity of the coating e.g., inclusion of C₂-C₆ carboxylic acid, may also considered to decrease ion resistance.

Calcining is also shown to decrease ion resistance (sample 3). Without wishing to be bound by theory, this is due to the calcining step converting amorphous Li₃PO₄ to crystalline Li₃PO₄, which is thought to have a lower ionic transport activation energy.

Accordingly, the coating of the disclosure may be used to reduce ion resistance and/or lower ionic transport activation.

### Example 7

The coated cathode active materials according to the disclosure are suitable for preparation of cathode from a water-based slurry. This was demonstrated by preparing cathodes from water-based slurries (W) and NMP-based slurries (N).

Fresh coin cells were prepared according to the details in Example 5 and the charge/discharge capacity of half cells comprising coated/uncoated cathode active materials prepared from W/N-based slurries was tested at 0.1C.

For NMP-based slurries the binder is PVDF, and for water-based slurries the binder is polyacrylamide (PAM).

**Table 4A**

| **CAM-N** | | Capacity Retention |
|---|---|---|
| Charge capacity | 237,41 | 90% |
| Discharge capacity | 213,05 | |
| Initial coulombic efficiency | 89,73927 | |

**Table 4B**

| **CAM-W** | | Capacity Retention |
|---|---|---|
| Charge capacity | 228,54 | 87% |
| Discharge capacity | 202,71 | |
| Initial coulombic efficiency | 88,69782 | |

**Table 4C**

| **CAM-PA-CA-HT-N** | | Capacity Retention |
|---|---|---|
| Charge capacity | 241,71 | 89% |
| Discharge capacity | 215,63 | |
| Initial coulombic efficiency | 89,21021 | |

**Table 4D**

| **CAM-PA-CA-HT-W** | | Capacity Retention |
|---|---|---|
| Charge capacity | 241,08 | 90% |
| Discharge capacity | 215,98 | |
| Initial coulombic efficiency | 89,58852 | |

For uncoated cathode active materials, there is around a 3% capacity retention drop for a water-based slurry compared to an NMP-based slurry. For the coated cathode active material of the disclosure, the capacity retention slightly increases when the CAM is prepared from a water-based slurry compared to an NMP-based slurry.

The coated cathode active material of the disclosure can be used in an aqueous cathode preparation method with little or no effect on the electronic properties.

### Example 8

Fresh coin cells were prepared according to the details in Example 5, and the generation of HF tested for uncoated and coated cathode active materials when the cell is cycled the presence of an electrolyte comprising LiPF₆.

The cells were first cycled between 4.3V and 2.8V at 0.1C/0.1C charge/discharge rate between, and then a further 50 cycled between 4.3V and 2.8V was carried out at 1C/1C charge/discharge rate.

The cells were then dis-assembled, and the positive electrodes placed in 10g of filtered electrolyte solution for seven days at 60°C.

A titration specific for HF was then carried out to determine the whether the coating protected the cathode active material from degradation via HF.

Fluorine-based electrolytes (such as LiPF6) inevitably result in HF formation due to electrolyte decomposition. HF is highly corrosive and will etch the surface of the cathode active materials causing transition metal dissolution. Transition metal dissolution in turn, causes more HF to be produced by further electrolyte decomposition.

Additionally, transition metals and HF may react to produce a metal fluoride and water. Water inside the cell causes the cell to swell, and may result in mechanical damage.

All of the above are detrimental to cell performance and will result in a decreased lifetime. It is therefore beneficial to maintain a low amount of HF in the electrolyte.

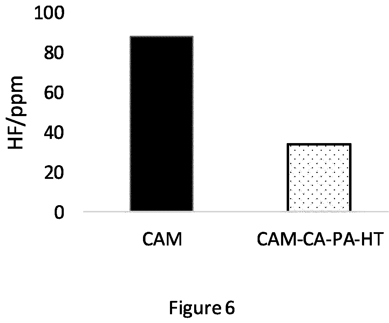

Figure 6 shows that for uncoated cathode active materials, around 88ppm HF was detectable, whereas for coated cathode active materials, only 34ppm HF was detectable. Accordingly, the coating of the disclosure is suitable for preventing cathode active material degradation/transition metal dissolution via a reaction with the electrolyte, or electrolyte by-product.

Accordingly, the coated cathode active material of the disclosure may be used to increase cell and/or battery lifetime and/or prevent against HF formation.

### Example 9

| **Sample** | **DCIR at SOC 50% (Ω)** |
|---|---|
| CAM-PA-CA-HT | 6.3 |
| Comparative example | 8.5 |

To demonstrate the improved water stability of coatings according to the disclosure, direct current internal resistance (DCIR) measurements were carried out on half cells comprising a coated cathode active material prepared with residual lithium, a phosphate course, carboxylic acid and calcination (CAM-PA-CA-HT), and a coated cathode active material prepared via the method described in Sun-Woo Lee *et al.*

The cathode layer of each half cell was prepared from an aqueous slurry.

The DCIR measurements show a significantly improved (lower) DCIR for the CAM prepared according to the disclosure. This demonstrated improved water stability of the inventive coating compared to coatings known in the art. This ties in with the result of Example 4, and without wishing to be bound by theory, it is considered that the lower amount of LiOH and Li₂CO₃ on the surface of the CAM is key to providing improved water stability.

### Items

Item 1. A lithium intercalation cathode active material coated with Li₃PO₄, wherein
the coated cathode active material is water stable.

Item 2. The cathode active material of item 1, wherein water-stable means cathode active material that does not cause a change in water pH of more than 0.3 pH units in 12 hours when dispersed at 1:2 w/w in water at 25°C.

Item 3. The cathode active material of item 1, wherein the coated cathode active material does not cause a change in water pH more than 0.2 pH units in 12 hours when dispersed at 1:2 w/w in water at 25°C.

Item 4. The cathode active material of any preceding item, wherein the cathode active material is an NMC material, preferably a high-nickel NMC material.

Item 5. The coated cathode active material of any preceding item wherein the Li₃PO₄ has been formed by a reaction between a phosphate source and LiOH and/or Li₂CO₃ groups on the surface of the cathode active material.

Item 6. The cathode active material of any preceding item wherein the Li₃PO₄ coating is an integral coating.

Item 7. The coated cathode active material of any preceding item wherein the concentration of LiOH is 0.2wt% per m²/g or less, for instance 0.18wt% or less, or 0.15wt% or less wherein the surface area of the particles is determined via a BET nitrogen absorption isotherm.

Item 8. The cathode active material of any preceding item wherein the coating thickness is less than 3nm, for instance 2.8nm or less, 2.5nm or less, 2.2 nm or less, or 2nm or less.

Item 9. A method for fabricating a cathode active material coated with Li₃PO₄ comprising;
(a) Mixing a lithium intercalation cathode active material
   a phosphate source;
   a C₂-C₆ carboxylic acid;
   optionally a solvent; and
(b) calcining the mixture at 300-800°C.

Item 10. The method of item 9 wherein the reactants consist of a lithium intercalation cathode active material, a phosphate source and a C₂-C₆ carboxylic acid.

Item 11. The method of items 9-10 wherein the coating is formed by a reaction between the phosphate source and LiOH and/or Li₂CO₃ groups on the surface of the cathode active material.

Item 12. The method of items 9-11 wherein no lithium source is added in step (a).

Item 13. The method of items 9-12, wherein the phosphate source is selected from H₃PO₄, (NH₄)₃PO4, (NH₄)₂HPO₄ or NH₄H₂PO₄, or mixtures thereof.

Item 14. The method of items 9-13, wherein the C₂-C₆ carboxylic acid is selected from citric acid, acetic acid, malonic acid, or mixtures thereof.

Item 15. The method of items 9-14 comprising a solvent, wherein the solvent comprises water and at least one of methanol, ethanol, propanol, butanol, acetone, acetonitrile or mixtures thereof.

Item 16. The method of items 9-15, wherein the mole ratio of cathode active material: phosphate source: C₂-C₆ carboxylic acid is 90-99%:0.01%-8%:0.005-3%.

Item 17. The method of items 9-16 wherein step (b) is carried out in air for 30 minutes to 4 hours.

Item 18. A cathode active material coated obtainable by the method of any one of items 9-17.

Item 19. An electrode comprising the cathode active material of items 1-8 or 18.

Item 20. A method of forming the electrode of item 19, comprising
providing a mixture of the cathode active material of items 1-8 or 18, a binder and optionally a conductive additive, optionally wherein the mixture is a slurry comprising (or consisting of) water as the dispersant;
forming an electrode active layer on a current collector using said mixture.

Item 21. A cell, for example a secondary lithium-ion cell, comprising the electrode of item 19.

## Claims

1. A lithium intercalation cathode active material coated with Li₃PO₄, wherein
the coated cathode active material is water stable.

2. The cathode active material of claim 1, wherein water-stable means cathode active material that does not cause a change in water pH of more than 0.3 pH units in 12 hours when dispersed at 1:2 w/w in water at 25°C.

3. The cathode active material of claim 1, wherein the coated cathode active material does not cause a change in water pH more than 0.2 pH units in 12 hours when dispersed at 1:2 w/w in water at 25°C.

4. The cathode active material of any preceding claim, wherein the cathode active material is an NMC material, preferably a high-nickel NMC material.

5. The coated cathode active material of any preceding claim wherein the concentration of LiOH is 0.2wt% per m²/g or less, for instance 0.18wt% or less, or 0.15wt% or less wherein the surface area of the particles is determined via a BET nitrogen absorption isotherm.

6. The cathode active material of any preceding claim wherein the coating thickness is less than 3nm, for instance 2.8nm or less, 2.5nm or less, 2.2 nm or less, or 2nm or less.

7. A method for fabricating a cathode active material coated with Li₃PO₄ comprising;
(a) Mixing a lithium intercalation cathode active material
a phosphate source;
a C₂-C₆ carboxylic acid;
optionally a solvent; and
(b) calcining the mixture at 300-800°C, preferably wherein
step (b) is carried out in air for 30 minutes to 4 hours.

8. The method of claim 7 wherein the reactants consist of a lithium intercalation cathode active material, a phosphate source and a C₂-C₆ carboxylic acid.

9. The method of claim 7-8, wherein the phosphate source is selected from H₃PO₄, (NH₄)₃PO4, (NH₄)₂HPO₄ or NH₄H₂PO₄, or mixtures thereof.

10. The method of claims 7-9, wherein the C₂-C₆ carboxylic acid is selected from citric acid, acetic acid, malonic acid, or mixtures thereof.

11. The method of claims 7-10 comprising a solvent, wherein the solvent comprises water and at least one of methanol, ethanol, propanol, butanol, acetone, acetonitrile or mixtures thereof.

12. The method of claims 7-11, wherein the mole ratio of cathode active material: phosphate source: C₂-C₆ carboxylic acid is 90-99%:0.01%-8%:0.005-3%.

13. An electrode comprising the cathode active material of claims 1-6.

14. A method of forming the electrode of claim 13, comprising
providing a mixture of the cathode active material of claims 1-6, a binder and optionally a conductive additive, optionally wherein the mixture is a slurry comprising (or consisting of) water as the dispersant;
forming an electrode active layer on a current collector using said mixture.

15. A cell, for example a secondary lithium-ion cell, comprising the electrode of claim 13.
